# EUROPÄISCHE PATENTSCHRIFT

(11) **EP 4 031 302 B1**
(45) Veröffentlichungstag und Bekanntmachung des Hinweises auf die Patenterteilung: **29.10.2025**
(21) Anmeldenummer: 20771250.6
(22) Anmeldetag: 08.09.2020
(51) Int. Cl.: B21B 1/22, B21B 27/00, C21D 8/02, C23C 2/06, C23C 2/26, C23C 2/40, C21D 8/04

(54) **STAHLBLECH MIT EINER DETERMINISTISCHEN OBERFLÄCHENSTRUKTUR**
SHEET STEEL HAVING A DETERMINISTIC SURFACE STRUCTURE
TÔLE D'ACIER À STRUCTURE DE SURFACE DÉTERMINISTE

(30) Priorität: 17.09.2019 DE 102019214135
(43) Veröffentlichungstag der Anmeldung: 27.07.2022
(73) Patentinhaber: ThyssenKrupp Steel Europe AG, 47166 Duisburg (DE)
(72) Erfinder: VOGT, Oliver, 44319 Dortmund (DE); JUNGE, Fabian, 40239 Düsseldorf (DE); BISCHOFF, Christine, 48317 Drensteinfurt (DE); CETINKAYA, Burak William, 44139 Dortmund (DE)
(74) Vertreter: ThyssenKrupp Steel Europe AG
(86) Internationale Anmeldenummer: PCT/EP2020/075083
(87) Internationale Veröffentlichungsnummer: WO 2021/052818

(56) Entgegenhaltungen:
- EP-A2- 1 584 396
- DE-B3- 102016 102 723
- JP-A- H 079 015
- JP-A- S63 132 701
- US-A- 4 783 378
- US-A- 4 798 772
- US-A- 5 532 051

## Beschreibung

Die Erfindung betrifft ein beschichtetes, mit einer deterministischen Oberflächenstruktur dressiertes Stahlblech. Des Weiteren betrifft die Erfindung ein Verfahren zum Herstellen eines beschichteten, mit einer deterministischen Oberflächenstruktur dressierten Stahlblechs.

Aus dem Stand der Technik sind gattungsgemäß beschichtete, mit einer deterministischen Oberflächenstruktur dressierte Stahlbleche bekannt, s. zum Beispiel Patentschrift EP2892663B1, US5532051A, US4783378A und JPH079015A.

Hinsichtlich des bekannten Standes der Technik besteht Optimierungsbedarf, insbesondere mit Blick auf eine Reduzierung der Ölauflage.

Die Aufgabe ist daher, ein beschichtetes, mit einer deterministischen Oberflächenstruktur dressiertes Stahlblech zur Verfügung zu stellen, welches im Vergleich zum Stand der Technik gleichwertige bzw. bessere Eigenschaften mit gleichzeitig reduziertem Öleinsatz bereitstellt.

Die Aufgabe wird mit den Merkmalen des Anspruches 1 gelöst.

Die Erfinder haben festgestellt, dass bei einem beschichteten, mit einer deterministischen Oberflächenstruktur dressierten Stahlblech im Vergleich zum Stand der Technik gleichwertige bzw. bessere Eigenschaften insbesondere mit gleichzeitig reduziertem Öleinsatz bereitgestellt werden können, wenn die Oberflächenstruktur ausgehend von einer Oberfläche des beschichteten Stahlblechs in das beschichtete Stahlblech eingeprägt ist, wobei die Oberflächenstruktur einen Flankenbereich aufweist, welcher ausgehend von der Oberfläche bis zu einem Talbereich verläuft, wobei erfindungsgemäß der Talbereich eine Rauheit Ra kleiner 300 nm aufweist, vorzugsweise um den Ölbedarf zu minimieren. Durch die Beschränkung der Rauheit Ra, wobei die Messmethode zur Bestimmung des Ra-Wertes in der DIN ISO EN 4287 angegeben ist, im Talbereich der Oberflächenstruktur mit einer Rauheit Ra kleiner 300 nm, insbesondere kleiner 250 nm, vorzugsweise kleiner 200 nm, bevorzugt kleiner 150 nm, weiter bevorzugt kleiner 100 nm, kann insbesondere Einfluss auf die lokale Ölverteilung genommen werden, sodass im Zuge von in Richtung des Flankenbereichs wirkenden Kapillarkräften innerhalb der Struktur das Öl nicht oder nur zu geringen Teilen den Talbereich benetzt und sich entlang des Flankenbereichs ansammelt. Je geringer die Rauheit Ra im Talbereich eingestellt ist, umso stärker kann der Einfluss der Kapillarkraft in Richtung des Flankenbereichs ausfallen, sodass durch die erfindungsgemäße Ausprägung der deterministischen Oberflächenstruktur ein beschichtetes Stahlblech mit reduziertem Ölbedarf überhaupt erst bereitgestellt werden kann.

Unter deterministischer Oberflächenstruktur sind wiederkehrende Oberflächenstrukturen zu verstehen, welche eine definierte Form und/oder Ausgestaltung aufweisen, vgl. EP 2 892 663 B1. Insbesondere gehören hierzu zudem Oberflächen mit einer (quasi-)stochastischen Anmutung, die jedoch mittels eines deterministischen Texturierungsverfahrens aufgebracht werden und sich somit aus deterministischen Formelementen zusammensetzen.

Unter Stahlblech ist allgemein ein Stahlflachprodukt zu verstehen, welches in Blechform bzw. in Platinenform oder in Bandform bereitgestellt werden kann.

Das erfindungsgemäß ausgebildete Stahlblech ist beschichtet Die Beschichtung des beschichteten Stahlblechs umfasst einen metallischen Überzug.

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung des erfindungsgemäßen Stahlblechs weist die Oberflächenstruktur einen Flankenbereich auf, welcher ausgehend von der Oberfläche bis zu einem Talbereich verläuft und zur Senkrechten des beschichteten Stahlblechs mit einem Winkel zwischen 1° und 89° ausgebildet ist. Der Winkel kann insbesondere zwischen 50° und 87°, vorzugsweise zwischen 60° und 85°, besonders bevorzugt zwischen 65° und 82° ausgebildet sein. Der Tal- und Flankenbereich (negative Form) der Oberflächenstruktur entspricht im Wesentlichen der Oberfläche (positive Form) an einer Dressierwalze, welche durch entsprechende Einwirkung auf das beschichtete Stahlblech die Oberflächenstruktur ausbildet respektive einprägt. Der die Oberflächenstruktur umlaufende und ausbildende Flankenbereich definiert zusammen mit dem einstückig an den Flankenbereich angeschlossenen Talbereich ein geschlossenes Volumen der in das beschichtete Stahlblech mittels Dressieren eingeprägten Oberflächenstruktur. Das geschlossene Volumen, das sogenannte Leervolumen, kann für die spätere Verarbeitung mittels Umformverfahren auf das zu applizierende Umformmittel, insbesondere Öl, abgestimmt sein.

Gemäß einer Ausgestaltung des erfindungsgemäßen Stahlblechs ist das Stahlblech mit einem zinkbasierten Überzug beschichtet, welcher durch Schmelztauchbeschichten aufgebracht ist, wobei im Überzug neben Zink und unvermeidbaren Verunreinigungen zusätzliche Elemente wie Aluminium mit einem Gehalt von bis zu 5 Gew.-% und/oder Magnesium mit einem Gehalt von bis zu 5 Gew.-% in dem Überzug enthalten sein können. Stahlbleche mit zinkbasiertem Überzug weisen einen sehr guten kathodischen Korrosionsschutz auf, welche seit Jahren im Automobilbau eingesetzt werden. Ist ein verbesserter Korrosionsschutz vorgesehen, weist der Überzug zusätzlich Magnesium mit einem Gehalt von mindestens 0,3 Gew.-%, insbesondere von mindestens 0,6 Gew.-%, vorzugsweise von mindestens 0,9 Gew.-% auf. Aluminium kann alternativ oder zusätzlich zu Magnesium mit einem Gehalt von mindestens 0,3 Gew.-% vorhanden sein, um insbesondere eine Anbindung des Überzugs an das Stahlblech zu verbessern und insbesondere eine Diffusion von Eisen aus dem Stahlblech in den Überzug bei einer Wärmebehandlung des beschichteten Stahlblechs im Wesentlichen zu vermeiden, damit beispielsweise eine gute Klebeignung gewährleistet werden kann. Dabei kann eine Dicke des Überzugs zwischen 1 und 15 µm, insbesondere zwischen 2 und 12 µm, vorzugsweise zwischen 3 und 10 µm betragen. Unterhalb der Mindestgrenze kann kein ausreichender kathodischer Korrosionsschutz gewährleistet werden und oberhalb der Höchstgrenze können Fügeprobleme beim Verbinden des erfindungsgemäßen Stahlblechs respektive eines daraus gefertigten Bauteils mit einem anderen Bauteil auftreten, insbesondere kann bei Überschreiten der Dicke des Überzugs angegebenen Höchstgrenze kein stabiler Prozess beim thermischen Fügen bzw. Schweißen sichergestellt werden.

Gemäß einer Ausgestaltung des erfindungsgemäßen Stahlblechs ist das beschichtete Stahlblech zusätzlich mit einem Öl beölt, wobei insbesondere das Öl mit einer Auflage bis zu 2 g/m² in der Oberflächenstruktur aufgenommen ist. Aufgrund der Dimensionierung der Oberflächenstruktur besteht nur wenig Bedarf an Öl, sodass die Auflage bis zu 2 g/m², insbesondere bis zu 1,5 g/m², vorzugsweise bis zu 1,2 g/m², bevorzugt bis zu 1 g/m² begrenzt ist. Insbesondere durch die starke Kapillarkraft in Richtung des Flankenbereichs und der geringen Rauheit im Talbereich lagert sich das Öl nach der Beölung im Wesentlichen entlang des Flankenbereichs und/oder am Übergang zwischen Flankenbereich und Talbereich der Oberflächenstruktur ab und steht für weitere Prozesse, wie zum Beispiel für formgebende Prozesse, vorzugsweise für Tiefziehprozesse, bereit, um die Schmierung zu verbessern und die Reibung und somit den Verschleiß der formgebenden Mittel, wie zum Beispiel Formgebungsvorrichtungen, vorzugsweise (Tiefzieh-) Pressen, zu reduzieren. Insbesondere kann eine Anlagerung des Öls an tribologisch ungünstigen Bereichen, die nicht zur Ölzufuhr in die eigentliche Kontakt- bzw. Reibzone beitragen, wirksam unterdrückt werden. Somit hat das erfindungsgemäße Stahlblech mit verringerter Ölauflage sehr gute tribologische Eigenschaften und ist im Vergleich zu den aus dem Stand der Technik bekannten, beölten Stahlblechen umweltschonender insbesondere durch geringeren Ressourceneinsatz.

Gemäß einem zweiten Aspekt betrifft die Erfindung ein Verfahren zum Herstellen eines beschichteten, mit einer deterministischen Oberflächenstruktur dressierten Stahlblechs umfassend folgende Schritte:
- Bereitstellen eines beschichteten Stahlblechs,
- Dressieren des beschichten Stahlblechs mit einer Dressierwalze, wobei die Oberfläche der Dressierwalze, welche auf die Oberfläche des beschichteten Stahlblechs einwirkt, mit einer deterministischen Oberflächenstruktur derart eingerichtet ist, dass nach dem Dressieren die Oberflächenstruktur ausgehend von einer Oberfläche des beschichteten Stahlblechs in das beschichtete Stahlblech eingeprägt ist, wobei die Oberflächenstruktur einen Flankenbereich aufweist, welcher ausgehend von der Oberfläche bis zu einem Talbereich verläuft und wobei der Talbereich eine Rauheit Ra kleiner 300 nm aufweist.

Die Oberfläche (positive Form) der Dressierwalze bildet durch Krafteinwirkung auf die Oberfläche des beschichteten Stahlblechs eine Oberflächenstruktur aus, welche einen Tal- und Flankenbereich (negative Form) definiert und entspricht im Wesentlichen der Oberfläche (positive Form) der Dressierwalze. Die Dressierwalze zur Ausbildung einer deterministischen Oberflächenstruktur kann mit geeigneten Mitteln bearbeitet werden, beispielsweise mittels Laser, vgl. EP 2 892 663 B1. Des Weiteren können auch andere Abtragverfahren zur Einstellung einer Oberfläche an einer Dressierwalze eingesetzt werden, beispielsweise spanende Fertigungsverfahren mit geometrisch bestimmter oder unbestimmter Schneide, chemische bzw. elektrochemische, optische oder plasmainduzierte Verfahren, welche geeignet sind, eines zu dressierenden, im Talbereich einer Oberflächenstruktur eines beschichteten Stahlblechs eine Rauheit Ra kleiner 300 nm umsetzen zu können. Alternativ oder zusätzlich kann die Dressierwalze auch einem Nachbearbeitungsprozess, vorzugsweise einem Schleifprozess, unterzogen werden, wodurch insbesondere der den Talbereich in einem insbesondere beschichteten Stahlblech ausbildende Teil der Dressierwalze, in diesem Fall ein korrespondierender Bergbereich oder Plateau auf der Oberfläche der Dressierwalze, geglättet wird, wodurch optional die Rauheit weiter reduziert werden kann.

Um Wiederholungen zu vermeiden, wird jeweils auf die Ausführungen zu dem erfindungsgemäßen beschichteten, mit einer deterministischen Oberflächenstruktur dressierten Stahlblech verwiesen.

Erfindungsgemäß wird vor dem Bereitstellen des Stahlblechs das Stahlblech durch Schmelztauchbeschichten beschichtet. Vorzugsweise kann die Schmelze zum Schmelztauchbeschichten neben Zink und unvermeidbaren Verunreinigungen zusätzliche Elemente wie Aluminium mit einem Gehalt von bis zu 5 Gew.-% und/oder Magnesium mit einem Gehalt von bis zu 5 Gew.-% enthalten.

Gemäß einer Ausgestaltung des erfindungsgemäßen Verfahrens wird das Stahlblech nach dem Dressieren zusätzlich mit Öl beölt, wobei das Öl mit einer Auflage bis zu 2 g/m², bevorzugt mit einer Auflage bis zu 1 g/m² aufgebracht wird.

Im Folgenden werden konkrete Ausgestaltungen der Erfindung mit Bezugnahme auf die Zeichnung im Detail näher erläutert. Die Zeichnung und begleitende Beschreibung der resultierenden Merkmale sind nicht beschränkend auf die jeweiligen Ausgestaltungen zu lesen, dienen jedoch der Illustration beispielhafter Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, speziell bei zusätzlichen Ausgestaltungen, welche nicht dargestellt sind. Gleiche Teile sind stets mit den gleichen Bezugszeichen versehen.

Die Zeichnung zeigt in
- Figur 1a) und 1b): jeweils eine schematische Teilschnittansicht eines ersten und zweiten erfindungsgemäßen Ausführungsbeispiels eines beschichteten, mit einer deterministischen Oberflächenstruktur dressierten Stahlblechs,
- Figur 2a), 2b) und 2c): Teildarstellungen eines gemäß dem Stand der Technik beschichteten, mit einer stochastischen Oberflächenstruktur dressierten Stahlblechs und
- Figur 3a), 3b) und: 3c)Teildarstellungen eines beschichteten, mit einer deterministischen Oberflächenstruktur dressierten Stahlblechs eines dritten erfindungsgemäßen Ausführungsbeispiels.

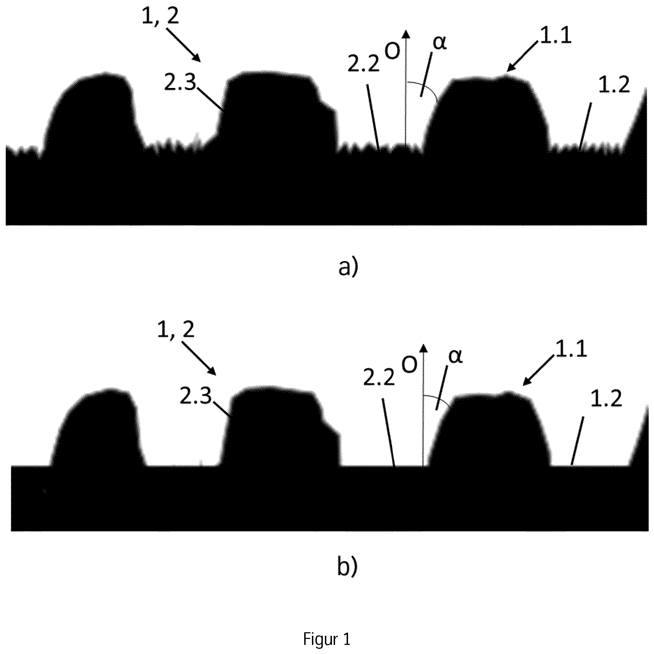

In den Figuren 1a) und 1b) sind jeweils eine schematische Teilschnittansicht eines ersten und zweiten erfindungsgemäßen Ausführungsbeispiels eines beschichteten, mit einer deterministischen Oberflächenstruktur (2) dressierten Stahlblechs (1) dargestellt. Die Oberflächenstruktur (2) ist ausgehend von einer Oberfläche (1.1) des Stahlblechs (1) in das beschichtete Stahlblech (1) eingeprägt, wobei die Oberflächenstruktur (2) einen Flankenbereich (2.3) aufweist, welcher ausgehend von der Oberfläche (1.1) bis zu einem Talbereich (2.2) verläuft. Der Talbereich (2.2) weist eine Rauheit Ra kleiner 300 nm auf. Abhängig von dem Abtragverfahren, mit welchem die entsprechende Dressierwalze (nicht dargestellt) zum Dressieren des beschichteten Stahlblechs (1) bearbeitet worden ist, kann der Talbereich (2.2) durch den entsprechend korrespondierenden Bereich auf der nicht dargestellten Dressierwalze (Bergbereich/Plateau) eingestellt werden. Zusätzlich kann die Dressierwalze mittels eines Schleifprozesses nachbearbeitet werden, wobei der Bergbereich/Plateau entsprechend geglättet wird, sodass eine weitere Reduzierung der Rauheit Ra im Talbereich (2.2) umgesetzt werden kann. Des Weiteren ist in den Figuren 1a) und 1b) gut zu erkennen, dass die Oberflächenstruktur (2) einen Flankenbereich (2.3) aufweist, welcher ausgehend von der Oberfläche (1.1) bis zu einem Talbereich (2.2) verläuft und zur Senkrechten (O) des beschichteten Stahlblechs (1) mit einem Winkel (α) zwischen 1° und 89° ausgebildet ist. Der die Oberflächenstruktur (2) umlaufende und ausbildende Flankenbereich (2.3) definiert zusammen mit dem einstückig an den Flankenbereich (2.3) angeschlossenen bzw. angebundenen Talbereich (2.2) ein geschlossenes Volumen der in das beschichtete Stahlblech (1) mittels Dressieren eingeprägten Oberflächenstruktur (2). Die Figur 1b) zeigt im Talbereich (2.2) eine im Vergleich zu Figur 1a) glattere und dadurch bedingt eine geringe Rauheit Ra, welche mittels einer nicht dargestellten, geschliffenen Dressierwalze bearbeitet wurde, sodass eine deterministische Oberflächenstruktur (2) auf einem beschichteten Stahlblech (1) herstellbar ist, welche im Talbereich (2.2) der Oberflächenstruktur (2) mit einer Rauheit Ra insbesondere kleiner 250 nm, vorzugsweise kleiner 200 nm, bevorzugt kleiner 150 nm, weiter bevorzugt kleiner 100 nm eingestellt werden kann.

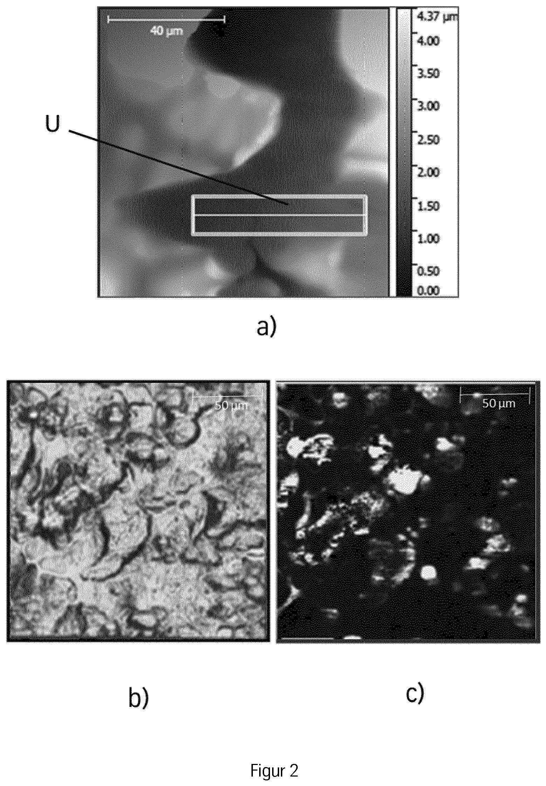

In den Figuren 2a), 2b) und 2c) sind Teildarstellungen eines gemäß dem Stand der Technik beschichteten, mit einer stochastischen Oberflächenstruktur dressierten Stahlblechs gezeigt. Die Oberflächenstruktur ist mittels einer EDT-strukturierten und anschließend geschliffenen Dressierwalze (nicht dargestellt) dressiert worden. In Figur 2a) ist ein Ausschnitt einer mit einem Zinküberzug versehenen Blechtopografie gemessen mit einer Rasterkraftmikroskopie (AFM) dargestellt. Die Rauheit Ra bezogen auf eine Fläche (U) von 60 x 12,5 µm² ist im Talbereich ermittelt worden, wobei ein Wert von Ra=323 nm bestimmt wurde. Exemplarisch ist eine Ölverteilung auf einer mittels einer EDT-strukturierten und anschließend geschliffenen Dressierwalze (nicht dargestellt) dressierten mit einem Zinküberzug versehenen Blechtopografien gezeigt, wobei in Figur 2b) ein Ausschnitt mittels Lichtmikroskopie und in Figur 2c) der gleiche Ausschnitt jedoch mittels Raman-Spektroskopie, wobei die Ölauflage hell dargestellt ist, abgebildet ist. Der Talbereich der Oberflächenstruktur war zum Teil gänzlich mit Öl gefüllt, wobei die Ölauflage mehr als 2 g/m² betrug.

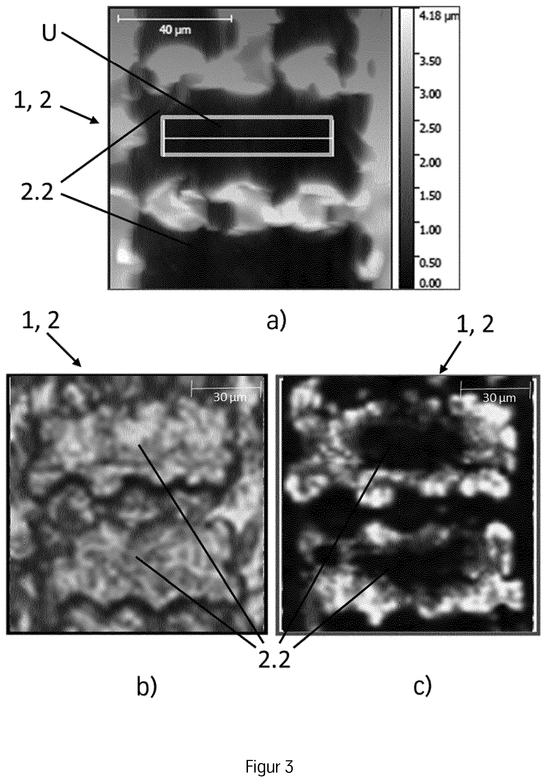

Anders fiel das Ergebnis bei der Betrachtung der Teildarstellungen eines beschichteten, mit einer deterministischen Oberflächenstruktur dressierten Stahlblechs (1) eines dritten erfindungsgemäßen Ausführungsbeispiels Figur 3a), 3b) und 3c) aus. Die Oberflächenstruktur ist mittels einer Laser-strukturierten und anschließend geschliffenen Dressierwalze (nicht dargestellt) dressiert worden. Die deterministische Oberflächenstruktur (2) ist am Beispiel einer immer wiederkehrenden I-förmigen Einprägung untersucht worden. Andere Ausführungsformen sind ebenfalls denkbar und anwendbar und nicht auf eine I-förmige Einprägung beschränkt. Die Figuren 3a), 3b) und 3c) zeigen zwei nebeneinander angeordnete I-förmige Einprägungen. In Figur 3a) ist ein Ausschnitt einer mit einem Zinküberzug (1.2) versehenen Blechtopografie (1, 2) gemessen mit einer Rasterkraftmikroskopie (AFM) dargestellt. Die Rauheit Ra bezogen auf eine Fläche (U) von 60 x 12,5 µm² ist im Talbereich (2.2) ermittelt worden, wobei ein Wert von Ra=77 nm bestimmt wurde. Exemplarisch ist eine Ölverteilung auf einer mittels einer Laser-strukturierten und anschließend geschliffenen Dressierwalze (nicht dargestellt) dressierten mit einem Zinküberzug (1.2) versehenen Blechtopografie (1, 2) gezeigt, wobei in Figur 2b) ein Ausschnitt mittels Lichtmikroskopie und in Figur 2c) der gleiche Ausschnitt jedoch mittels Raman-Spektroskopie, wobei die Ölauflage hell dargestellt ist, abgebildet ist. Der Talbereich (2.2) der Oberflächenstruktur (2) war im Wesentlichen nicht mit Öl benetzt, wobei das Öl sich entlang des Flankenbereichs (2.3) bzw. am Übergang zwischen Flankenbereich (2.3) und Talbereich (2.2) aufgrund der Kapillarwirkung und der reduzierten Rauheit Ra kleiner 300 nm im Talbereich (2.2) angesammelt hatte. Die Ölauflage konnte auf bis zu 1,5 g/m², insbesondere auf bis zu 1 g/m² reduziert werden.

Für weitere Untersuchungen wurden vier beschichtete und dressierte Stahlbleche (V1 bis V4) hergestellt. Die Art der Beschichtung wurde für alle Stahlbleche gleich gewählt, ein zinkbasierter Überzug (Zink und unvermeidbare Verunreinigungen), welcher im Feuerbeschichtungsprozess aufgebracht wurde und eine Dicke von ca. 7 µm einnahm. V1 und V2 entsprechen erfindungsgemäßen Stahlblechen (1) und V3 und V4 bilden Referenzbleche mit dem Unterschied zu V1 und V2, dass die Dressierwalze eine stochastische Oberflächenstruktur aufwies, wobei die Oberfläche der Dressierwalze beispielsweise mittels EDT strukturiert wurde, und somit auch eine stochastische Oberflächenstruktur in die Referenzbleche eingeprägt wurde. In Tabelle 1 ist eine Gegenüberstellung der erfindungsgemäßen Stahlbleche (1) und Referenzbleche angegeben.

**Tabelle 1**

| **Stahlbleche** | **Ra [µm]** | **Rz [µm]** | **Wsa [µm]** | **RPc [1/mm]** | **Ra [nm], Talbereich** | **Öl [g/m²]** | **Napfziehversuch** |
|---|---|---|---|---|---|---|---|
| V1 | 0,771 | 3,62 | 0,0783 | 11,9 | 121 | 1 | ++ |
| V2 | 1,43 | 5,92 | 0,113 | 13,9 | 189 | 1,3 | + |
| V3 | 1,08 | 7,53 | 0,198 | 10,2 | 367 | 2 | 0 |
| V4 | 1,08 | 6,81 | 0,198 | 10,1 | 420 | 1,8 | - |

Die Bestimmung der Oberflächenparameter Ra (arithmetischer Mittenrauwert), Rz (gemittelte Rautiefe) und RPc (Spitzenzahl ermittelt entlang einer definierten Länge, im obigen Fall pro mm) lassen sich aus der DIN EN ISO 4287 und der Kennwert bezogen auf die Langwelligkeit Wsa (arithmetische Mittenwelligkeit) gemäß SEP1941 ableiten. Die Angaben in Tabelle 1 in Bezug auf einen Streifenziehversuch, ein Napfziehversuch nach DIN EN 1669, welcher bei allen vier Stahlblechen V1 bis V4 unter gleichen Bedingungen durchgeführt wurde, zeigen aber überraschend, dass bessere Ergebnisse im Vergleich zwischen V1/V2 und V3/V4 erzielt werden konnten. Bewertet wurde nach folgenden Kriterien:
++ bedeutet, dass sowohl der im Streifenziehversuch ermittelte Reibwert als auch die Ausdünnung am Auslauf der Stempelkante am geformten Stahlblech geringer sind (geringe Ausdünnung unter 5% der Ausgangsstahlblechdicke),
+ bedeutet, dass die minimale Ausdünnung am umgeformten Stahlblech über 5% aber unter 10% der Ausgangsstahlblechdicke liegt,
0 weist auf eine deutlich erkennbare Ausdünnung ohne Reißer hin, welche nicht mehr im tolerierbaren Bereich liegt (15% bis 25% der Ausgangsstahlblechdicke)
   und
- bedeutet, dass es zu Reißern kommt.

Zudem konnte gleichzeitig die Ölauflage am erfindungsgemäß beschichteten, mit einer deterministischen Oberflächenstruktur dressierten Stahlblech V1 und V2 auf unterhalb von 1,5 g/m² reduziert werden, wobei die Menge ausreichend war, um ein entsprechend gutes Ergebnis zu erzielen.

## Patentansprüche

1. Durch Schmelztauchbeschichten beschichtetes, mit einer deterministischen Oberflächenstruktur (2) dressiertes Stahlblech (1), wobei die Oberflächenstruktur (2) ausgehend von einer Oberfläche (1.1) des beschichteten Stahlblechs (1) in das beschichtete Stahlblech (1) eingeprägt ist, wobei die Oberflächenstruktur (2) einen Flankenbereich (2.3) aufweist, welcher ausgehend von der Oberfläche (1.1) bis zu einem Talbereich (2.2) verläuft, **dadurch gekennzeichnet, dass** der Talbereich (2.2) eine Rauheit Ra kleiner 300 nm aufweist, gemessen wie in der Beschreibung.

2. Stahlblech nach Anspruch 1, wobei der Flankenbereich (2.3) zur Senkrechten (O) des beschichteten Stahlblechs (1) mit einem Winkel (α) zwischen 1° und 89° ausgebildet ist.

3. Stahlblech nach Anspruch 1 oder 2, wobei das Stahlblech mit einem zinkbasierten Überzug (1.2) beschichtet ist, wobei im Überzug (1.2) neben Zink und unvermeidbaren Verunreinigungen zusätzliche Elemente wie Aluminium mit einem Gehalt von bis zu 5 Gew.-% und/oder Magnesium mit einem Gehalt von bis zu 5 Gew.-% in der Beschichtung (1.2) enthalten sein können.

4. Stahlblech nach einem der vorhergehenden Ansprüche, wobei das beschichtete Stahlblech (1) zusätzlich mit einem Öl beölt ist, wobei insbesondere das Öl mit einer Auflage bis zu 2 g/m² in der Oberflächenstruktur (2) aufgenommen ist.

5. Verfahren zum Herstellen eines beschichteten, mit einer deterministischen Oberflächenstruktur (2) dressierten Stahlblechs (1) umfassend folgende Schritte:
- Bereitstellen eines beschichteten Stahlblechs, wobei vor dem Bereitstellen des Stahlblechs das Stahlblech durch Schmelztauchbeschichten beschichtet wird,
- Dressieren des beschichteten Stahlblechs mit einer Dressierwalze, wobei die Oberfläche der Dressierwalze, welche auf die Oberfläche des beschichteten Stahlblechs einwirkt, mit einer deterministischen Oberflächenstruktur derart eingerichtet ist, dass nach dem Dressieren die Oberflächenstruktur (2) ausgehend von einer Oberfläche (1.1) des beschichteten Stahlblechs (1) in das beschichtete Stahlblech (1) eingeprägt ist, wobei die Oberflächenstruktur (2) einen Flankenbereich (2.3) aufweist, welcher ausgehend von der Oberfläche (1.1) bis zu einem Talbereich (2.2) verläuft und wobei der Talbereich (2.2) eine Rauheit Ra kleiner 300 nm aufweist, gemessen wie in der Beschreibung.

6. Verfahren nach Anspruch 5, wobei die Schmelze zum Schmelztauchbeschichten neben Zink und unvermeidbaren Verunreinigungen zusätzliche Elemente wie Aluminium mit einem Gehalt von bis zu 5 Gew.-% und/oder Magnesium mit einem Gehalt von bis zu 5 Gew.-% enthalten kann.

7. Verfahren nach Anspruch 5 oder 6, wobei das Stahlblech (1) nach dem Dressieren zusätzlich mit Öl beölt wird, wobei das Öl in einer Auflage bis zu 2 g/m² aufgebracht wird.

8. Verfahren nach Anspruch 7, wobei das Öl mit einer Auflage bis zu 1 g/m² aufgebracht wird.

## Claims

1. Steel sheet (1) coated by hot-dip coating with a deterministic surface structure (2), the surface structure (2) being embossed into the coated steel sheet (1) starting from a surface (1.1) of the coated steel sheet (1), the surface structure (2) having a flank region (2.3) which extends from the surface (1.1) to a valley region (2.2), **characterized in that** the valley region (2.2) has a roughness Ra of less than 300 nm, measured as in the description.

2. Steel sheet according to claim 1, wherein the flank region (2.3) is formed at an angle (α) of between 1° and 89° to the perpendicular (O) of the coated steel sheet (1).

3. Steel sheet according to claim 1 or 2, wherein the steel sheet is coated with a zinc-based coating (1.2), wherein in addition to zinc and unavoidable impurities, the coating (1.2) may contain additional elements such as aluminum with a content of up to 5% by weight and/or magnesium with a content of up to 5% by weight in the coating (1.2).

4. Steel sheet according to one of the preceding claims, wherein the coated steel sheet (1) is additionally oiled with an oil, wherein in particular the oil is absorbed in the surface structure (2) with a coating of up to 2 g/m².

5. A method of manufacturing a coated steel sheet (1) dressed with a deterministic surface structure (2) comprising the following steps:
- Providing a coated steel sheet, whereby the steel sheet is coated by hot-dip coating before the steel sheet is provided,
- skin-passing the coated steel sheet with a skin-pass roller, the surface of the skin-pass roller, which acts on the surface of the coated steel sheet, being set up with a deterministic surface structure in such a way that, after skin-passing, the surface structure (2) is impressed into the coated steel sheet (1) starting from a surface (1.1) of the coated steel sheet (1), wherein the surface structure (2) has a flank region (2.3) which extends from the surface (1.1) to a valley region (2.2) and wherein the valley region (2.2) has a roughness Ra of less than 300 nm, measured as in the description.

6. The process according to claim 5, wherein the melt for hot-dip coating may contain, in addition to zinc and unavoidable impurities, additional elements such as aluminum with a content of up to 5% by weight and/or magnesium with a content of up to 5% by weight.

7. Method according to claim 5 or 6, wherein the steel sheet (1) is additionally oiled with oil after skin-passing, the oil being applied in a layer of up to 2 g/m².

8. The method according to claim 7, wherein the oil is applied with a coating of up to 1 g/m².

## Revendications

1. Tôle d'acier (1) revêtue par immersion à chaud et dressée avec une structure superficielle déterministe (2), la structure superficielle (2) étant imprimée dans la tôle d'acier revêtue (1) en partant d'une surface (1.1) de la tôle d'acier revêtue (1), la structure superficielle (2) présentant une zone de flanc (2.3), qui s'étend depuis la surface (1.1) jusqu'à une zone de vallée (2.2), **caractérisée en ce que** la zone de vallée (2.2) présente une rugosité Ra inférieure à 300 nm, mesurée comme dans la description.

2. Tôle d'acier selon la revendication 1, dans laquelle la zone de flanc (2.3) est formée avec un angle ( ) compris entre 1° et 89° par rapport à la perpendiculaire (O) de la tôle d'acier revêtue (1).

3. Tôle d'acier selon la revendication 1 ou 2, dans laquelle la tôle d'acier est revêtue d'un revêtement (1.2) à base de zinc, le revêtement (1.2) pouvant contenir, outre du zinc et des impuretés inévitables, des éléments supplémentaires tels que de l'aluminium à une teneur allant jusqu'à 5 % en poids et/ou du magnésium à une teneur allant jusqu'à 5 % en poids dans le revêtement (1.2).

4. Tôle d'acier selon l'une quelconque des revendications précédentes, dans laquelle la tôle d'acier revêtue (1) est en outre huilée avec une huile, l'huile étant notamment absorbée dans la structure de surface (2) avec un dépôt pouvant atteindre 2 g/m².

5. Procédé de fabrication d'une tôle d'acier (1) revêtue et dressée avec une structure de surface déterministe (2), comprenant les étapes suivantes :
- fournir une tôle d'acier revêtue, dans lequel, avant de fournir la tôle d'acier, la tôle d'acier est revêtue par immersion à chaud,
- Dressage de la tôle d'acier revêtue avec un rouleau de dressage, la surface du rouleau de dressage, qui agit sur la surface de la tôle d'acier revêtue, étant aménagée avec une structure de surface déterministe de telle sorte qu'après le dressage, la structure de surface (2) est formée à partir d'une surface (1.1) de la tôle d'acier revêtue (1) est imprimée dans la tôle d'acier revêtue (1), la structure de surface (2) présentant une zone de flanc (2.3) qui s'étend depuis la surface (1.1) jusqu'à une zone de creux (2.2) et la zone de creux (2.2) présentant une rugosité Ra inférieure à 300 nm, mesurée comme dans la description.

6. Procédé selon la revendication 5, dans lequel la masse fondue pour le revêtement par immersion à chaud peut contenir, outre du zinc et des impuretés inévitables, des éléments supplémentaires tels que de l'aluminium avec une teneur allant jusqu'à 5 % en poids et/ou du magnésium avec une teneur allant jusqu'à 5 % en poids.

7. Procédé selon la revendication 5 ou 6, dans lequel la tôle d'acier (1) est en outre huilée après le dressage, l'huile étant appliquée en une couche allant jusqu'à 2 g/m².

8. Procédé selon la revendication 7, dans lequel l'huile est appliquée avec une couche allant jusqu'à 1 g/m².
